# EUROPEAN PATENT SPECIFICATION

(11) **EP 1 216 955 B1**
(45) Date of publication and mention of the grant of the patent: **15.02.2006**
(21) Application number: 01129328.9
(22) Date of filing: 14.12.2001
(51) Int. Cl.: C01B 3/38, C10G 9/20, B01J 8/06

(54) **Reformer process with variable heat flux side-fired burner system**
Reformierverfahren mit seitenerhitztem Brennersystem mit verstellbarem Wärmefluss
Procédé de réformage avec un système de brûleurs à flux thermique variable placé du côté latéral

(30) Priority: 20.12.2000 US 741284
(43) Date of publication of application: 26.06.2002
(73) Proprietor: AIR PRODUCTS AND CHEMICALS, INC., Allentown, PA 18195-1501 (US)
(72) Inventor: Wang, Shoou-i, Allentown, PA 18104 (US); Ying, David Hon, Allentown, PA 18106 (US); Pham, Hoanh Nang, Allentown, PA 18104 (US); Herb, Blaine Edward, Fogelsville, PA 18051 (US); Li, Xianming, Orefield, PA 18069 (US)
(74) Representative: Marx, Lothar

(56) References cited:
- US-A- 2 751 893
- US-A- 3 230 052
- US-A- 3 475 135
- US-A- 4 959 079

## Description

### BACKGROUND OF THE INVENTION

This invention relates to processes involving the heating of fluids, such as processes for the production of a gas containing hydrogen and carbon oxides by steam reforming a hydrocarbon feedstock, and in particular to an apparatus and method for hydrocarbon reforming processes, hydrocarbon cracking processes, and heating of fluids.

Although the invention is discussed within the context of steam reforming of hydrocarbons, the invention is not limited to use with such processes. The steam reforming process is a well known chemical process for hydrocarbon reforming. A hydrocarbon and steam mixture (a mixed-feed) reacts in the presence of a catalyst to form hydrogen, carbon monoxide and carbon dioxide. Since the reforming reaction is strongly endothermic, heat must be supplied to the reactant mixture, such as by heating the tubes in a furnace or reformer. The amount of reforming achieved depends on the temperature of the gas leaving the catalyst; exit temperatures in the range of 700° - 900 °C are typical for conventional hydrocarbon reforming.

Conventional catalyst steam reformer processes combust fuel to provide the energy required for the reforming reaction. In a reformer of such a conventional process, fuel typically is fired co-current to incoming cold feed gas to achieve a high average heat flux through the tube wall(s) by radiant heat transfer directly from the flame. Downstream from the burner end, both the product gas and the flue gas exit at relatively high temperatures.

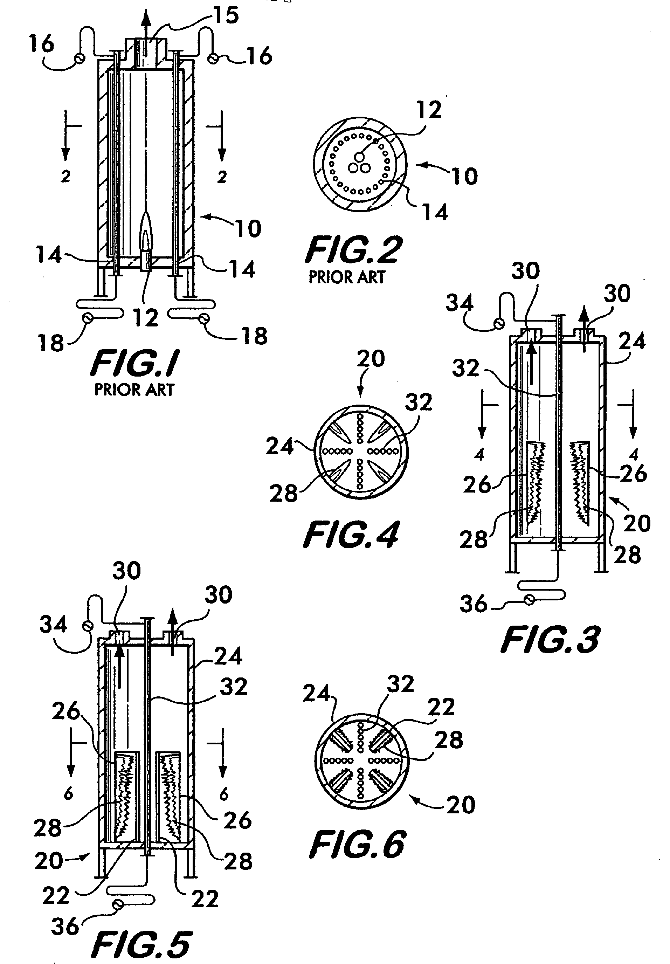

Figure 1 illustrates a conventional upflow, up-fired cylindrical reformer 10 (or furnace) having three burners 12 located therein. Tubes 14 are filled with catalyst and run the height of the reformer 10. A process fluid mixture enters through the inlet headers 18 and is injected into the tubes 14. The fluid mixture travels through the catalyst-filled tubes and exits to the outlet headers 16. The fluid mixture within the tubes is heated almost completely by radiant heat transfer from the burners 12 within the reformer. Only one side of the tube sees direct radiation from the flame, which results in non-uniform heating around the tube circumference. The flue gas exiting through the stack 15 is at a very high temperature.

To recover the sensible heat from the product syngas, prior art hydrocarbon reforming processes use a tube within a tube (tube-in-tube) arrangement with catalyst in the annuli. The feed absorbs heat from the combustion side of the furnace through the outside tube wall. The reformed gas flow is reversed at the end of the catalyst bed and enters the inner-most passage of the tube. The reformed gas then gives up heat to the counter-current flow of the incoming cold feed.

When the catalyst is fresh, a large fraction of the heat that is transferred through the tube is absorbed by the endothermic reactions that take place at high rates. When the catalyst in this region is deactivated (poisoned), the endothermic reactions occur at a slower rate and absorb a smaller fraction of the heat. As a result, the temperature of the process gas in this region is elevated and the tendency for coking/overheating the tube greatly increases.

U.S. Pat. No. 3,230,052 (Lee, *et al*.) discloses a terraced heater containing two rows of vertical catalyst-filled tubes (in a staggered arrangement). Each longitudinal wall of the furnace is made up of a series of planar surfaces that form a series of steps. The base of each step incorporates a series of troughs that run along the length of the furnace and incorporate (linear) burners. The burners inject flames into each trough to substantially fill each trough. The combustion is completed within the trough. The hot flue gases sweep over the inclined planar walls above each trough. The objective is to heat the inclined refractory wall to a (relatively) uniform temperature attempting to achieve a uniform heat intensity (heat flux) to the tubes in that section of the furnace. By altering the firing rate of any set of paired burners disposed at the same elevation, different zones of tubes can be subjected uniformly to heat intensities suitable for the reaction rate attainable therein. However, no information is provided on how the heat flux to each vertical section should differ and what determines the amount of fuel to be fired within each elevation. The fuel is burned and releases its heat of combustion at three discrete elevations in the furnace and the inclined vertical refractory walls are used in an attempt to evenly heat the tubes.

U.S. Pat. No. 3,182,638 (Lee, *et al*.) discloses a fired heater design that utilizes the same type of burners as disclosed in U.S. Pat. No. 3,230,052. Burners are located only on the floor. The furnace is divided into multiple cells using additional refractory faced walls. The object is to achieve a uniform heat flux to the serpentine tubes in each zone. The magnitude of heat transferred in each cell can be adjusted by controlling the fuel flow rate to each cell via trough burners firing along opposing walls.

U.S. Pat. No. 5,199,961 (Ohsaki, *et al*.) discloses an apparatus for catalytic reaction having a lower radiant heat transfer space and an upper space designed to enhance convective heat transfer to the vertical tubular reactor. In a similar manner as described in U.S. Pat. Nos. 3,182,638 and 3,230,052, burner assemblies (called linear burners) are located along the furnace floor between rows of tubes. These burners fire upward along the vertical refractory walls. The intent is to distribute the heat to the tubes more evenly along the height of the tube and to attempt to provide approximately equal heat flow to each tubular reactor. The fuel is burned and releases its heat of combustion at only one elevation in the furnace. This approach does not solve the problem of how to tailor the heat flux distribution along the height of the tubular reactor with the heat flux distribution required by the process (to achieve a uniform tube metal temperature over a substantial height of the reactor and to hold this temperature in close approach to the tube design limits). The approach described by this patent will tend to overheat the reactor tube wall in the vicinity of the burners.

U.S. Pat. No. 2,751,893 (Permann) discloses a radiant tubular heater and a method of heating. One object is to provide a method of achieving a uniform radiant heat flux around the circumference of the heater tube. To achieve this, Permann claims that the tube must be positioned in relation to a source of radiant heat in a manner to avoid direct impingement on the tube of the most intense part of the initial radiation and to distribute the radiant heat from the same source to opposite sides of the tubes by re-radiation from opposed radiating walls. This requires the tubes to be located between two refractory walls, with the burners located in the first. The tubes are not in the line-of-sight of the burners. A second object of the heater in U.S. Pat. No. 2,751,893 is similar to that of the terraced heater in U.S. Pat. No. 3,230,052 in that both attempt to achieve a distribution of radiant heat along the length of the tubes. Both arrangements require many individual burners at different elevations and positions (along the circumference or length and along the height of the furnace).

An article published in the *August 14, 1972 issue of The Oil and Gas Journal*, titled A New Steam-Methane Reformer Gives High CO/H2 Ratio, provides information about a side-fired reformer designed by Selas Corporation of America. Many burners are located in multiple rows in both sidewalls of the furnace. The reformer tubes are placed in a single row. The actual operating practice of the plant applies the same firing rate to each burner and results in a more or less uniform heat flux along the height of the tube.

Another article published in the *February 1, 1971 issue of The Oil and Gas Journal*, titled ASRT Heater - A Break from Tradition, provides information about the Short Residence Time (SRT) Heater Technology developed by Lummus Company. This heater contains a single row of tubes in a serpentine coil arrangement that is fired on both sides with many burners (process stream flows across furnace). The objective is to achieve a high heat flux to maximize capacity. Recognizing that tube operation is limited by maximum tube metal temperature, the goal is to achieve a tube temperature profile that is as uniform as possible along the entire tube height. The burners are manifolded to permit control of firing rate separately at the outlet and inlet ends of the coil. The article states that this approach does not reduce the flue gas temperature in the upper part of the furnace, because doing so normally would result in lower heat absorption in that area. Therefore, the furnace is fired throughout the height in an attempt to produce a uniform heat flux over an entire zone of the furnace and the flue gas exits at a relatively high temperature.

U.S. Pat. No. 4,959,079 (Grotz, *et al*.) discloses a furnace and process for reforming of hydrocarbons. The furnace consists of a radiant section and a convective section. The steam and hydrocarbon flow down through the catalyst-filled tube, first through the convective section and then through the radiant section. Fuel is fired in the radiant section and the combustion products flow counter-currently with the process gas in the convective section. To enhance the convective heat transfer in the convective section the width is reduced (resulting in higher flue gas velocities) and extended surfaces (fins) are added to the reformer tube.

U.S. Pat. No. 3,172,739 (Koniewiez) discloses an apparatus that comprises a natural-draft primary reforming furnace with an integral steam generator. The reforming furnace is cylindrical with reforming tubes arranged in a radial pattern inside an annulus. The central duct does not contain reformer tubes. A secondary burner fires into the central duct to provide for additional steam generation capability. Koniewiez does not discuss the problem of ensuring that (for each vertical slice of the furnace) each tube is heated uniformly around the circumference and that each tube segment receives the same amount of heat. Koniewiez also does not discuss the problem of ensuring that the amount of heat (heat flux) supplied to each segment of the tube does not cause the tube to overheat. No examples are given to illustrate that a practical design can be achieved with the primary floor-mounted burners. (The patent does state that additional burners may be positioned in the wall of the furnace and on the outer surface of the central duct.) There will be a very high tendency to locally overheat the bottom of the reformer tubes with floor-mounted burners. The outlet segment of the tube will run hot and will limit the firing rate and average heat flux (heating capacity). The remainder of the tube will be poorly utilized and will operate well below the design temperature. Floor mounted burners will restrict capacity, aggravate tube temperature, and increase tube wall thickness requirements.

U.S. Pat. No. 3,475,135 (Gargominy) discloses a reforming furnace design with a rectangular enclosure. Vertical reformer tubes are placed in a zigzag arrangement between the longitudinal walls of the enclosure. Two rows of burners are located on the longitudinal walls. Process flow is downward and the flue gas flow is also downward (co-current flow). This furnace also contains a lower section designed to enhance convective heat transfer. In the convective section, the tubes are enclosed in channels to increase the flue gas velocity and the channels are filled with refractory pellets. This design approach applies side-fired, down-flow reforming with co-current flow (process gas and flue gas exit at bottom of furnace). The modifications to increase the outside convective heat transfer coefficient are added to enhance the overall heat transfer at the outlet end of the tube. At this location, the temperature driving force (difference between the flue gas and outer tube skin temperature) is getting smaller. In contrast, when the flue gas exits counter to the incoming process gas, the heat transfer rate (primarily by radiation to inlet end of the bare tubes) is increased because of a larger temperature driving force.

U.S. Pat. No. 3,947,326 (Nakase, *et al*.) discloses a vertical tube type cracking furnace for ethylene and the like. Many burners are mounted along the side walls of the furnace to heat either one or two rows of vertical reaction tubes located between the sidewalls. The objective is to apply a uniform heat flux along the vertical tubes, which is not an optimal means to maximize thermal efficiency. (Optimizing thermal efficiency is not an objective of this patent, which teaches a method that actually results in a poor thermal efficiency.)

U.S. Pat. No. 5,993,193 (Loftus, *et al*.) discloses a Variable Heat Flux Low Emissions Burner, which is provided with a plurality of fuel gas inlets for enabling manipulation of the flame shape and combustion characteristics of the burner based upon variation in the distribution of fuel gas between the various fuel gas inlets. The purpose of this is to vary the pattern of heat flux being produced when the burner apparatus is in operation. However, this burner is a circular burner with intricate design, apparently aimed at achieving a great degree of premixing and reduced NOx emissions. More importantly, the heat flux pattern of this burner is a longitudinal heat flux distribution along the flame. This type of burner is not capable of tailoring the heat release profile to match the process requirements.

U.S. Pat. No. 5,295,820 (Bilcik, *et al*.) discloses a linear burner with a line of nozzles individually selected to operate by an electrically regulated distributor for the food industry. The intent is to have a burner with a wide range of heating power or turndown ratio.

It is desired to have an apparatus and a method for processes involving the heating of fluids (*e.g.*, hydrocarbon reforming, cracking, and other processes) which overcome the difficulties, problems, limitations, disadvantages and deficiencies of the prior art to provide better and more advantageous results.

It is further desired to have a more efficient and economic process and apparatus for heating, reforming, or cracking hydrocarbon fluids or other fluids;

It is still further desired to have a reforming technology that will provide a higher thermal efficiency and production rate by overcoming the limitations inherent in the prior art.

It is still further desired to have a more efficient technology that also is applicable to other fired process heating applications, such as ethylene cracking furnaces.

It is still further desired to achieve a prescribed variable heat flux profile which matches the process heat requirement and maximizes the heat flux to the tubes in the lower (fired) region of a furnace.

It is still further desired to have an apparatus and a method for hydrocarbon reforming processes which has a simplified burner system located in one region (*e.g*.,the lower region) of the furnace that achieves a prescribed heat flux profile and makes maximum use of the tube(s) in the fired zone.

It also is desired to have an apparatus and method for hydrocarbon reforming processes which will:
transfer heat from the combustion space into the process at high rates (high average heat fluxes);
achieve high capacity in a compact furnace design with as few tubes as possible (maximum throughput per tube);
prevent the formation of hot spots on the tubes by achieving heat flux distributions, axial and circumferential, that supply the maximum amount of heat possible to a local section of the tube without causing it to overheat;
achieve the maximum possible radiant efficiency (minimum possible fuel consumption);
significantly reduce the potential for coking (hydrocarbon cracking, carbon formation, fouling, plugging) that commonly occurs near the process inlet end of the reformer tube;
avoid exceeding the tube design temperature limits (and avoid being constrained to operate with less efficient operating conditions, such as a high steam-to-carbon ratio and low process effluent temperature);
allow for operating flexibility to continue to achieve design production rates for an extended period of time;
reduce catalyst replacement cost by extending operating time for a charge of catalyst; and
simplify the burner system and associated piping, valves and controls to reduce capital and maintenance costs.

### BRIEF SUMMARY OF THE INVENTION

The invention is an apparatus and method for heating, reforming, or cracking hydrocarbon fluids or other fluids. The invention includes the use of a variable heat flux side-fired burner system for use in processes for heating, reforming, or cracking hydrocarbon fluids or other fluids.

A first embodiment of the apparatus as defined in claim 1 includes: an elongated shell having an inner wall, a first end, and a second end opposite the first end; at least one elongated reaction chamber having a design temperature; a plurality of burners adjacent the inner wall; and transfer means adjacent the second end of the shell. The elongated shell has a first longitudinal axis, the shell being substantially symmetrical about the first longitudinal axis and enclosing a first interior region adjacent the first end and a second interior region adjacent the second end. Each of the first and second interior regions are substantially symmetrical about the first longitudinal axis. The at least one elongated reaction chamber has a second longitudinal axis substantially parallel to the first longitudinal axis. The reaction chamber is substantially symmetrical about the second longitudinal axis. A first portion of the reaction-chamber is disposed in the first interior region of the shell, and a second portion of the reaction chamber is disposed in the second interior region of the shell. The first and second portions of the reaction chamber are adapted to contain a flow of the process fluid. Each of the burners is adapted to combust at least one fuel, thereby producing a flue gas in the first interior region of the shell and a variable heat flux. The variable heat flux substantially approximates the process heat requirement and simultaneously maximizes the heat flux to substantially all of the first portion of the reaction chamber while maintaining substantially all of the first portion substantially at the design temperature without substantially exceeding the design temperature. At least a portion of the flow of the flue gas flows from the first interior region of the shell to the second interior region of the shell via the transfer means. At least a portion of the process fluid flows through at least the first or second portion of the reaction chamber counter-currently with at least a portion of the flow of the flue gas.

In a preferred embodiment, the reaction chamber(s), which preferably is a tubular device, is a reformer tube. The tubular device may be a reformer radiant tube or a tube-in-tube device.

There are many variations of the first embodiment of the apparatus. In a variation, a substantial portion of the reaction chamber is substantially vertical within the shell. In another variation, a flame is radially directed from the burner substantially toward the first longitudinal axis of the shell.

In the preferred embodiment, the shell is substantially cylindrical. However, the shell may have other shapes. In one variation, the shell has a cross-sectional area substantially in the form of an ellipse. In another variation, the shell has a cross-sectional area substantially in the form of a polygon.

Another embodiment of the invention is similar to the first embodiment of the apparatus but includes at least one refractory wall disposed in the shell adjacent the burner. The refractory wall is substantially perpendicular to the inner wall of the shell.

Yet another embodiment of the invention similar to the first embodiment of the apparatus has a particular burner arrangement using a plurality of elongated burner assemblies adjacent the inner wall. Each of the burner assemblies has a different longitudinal axis substantially parallel to the first and second longitudinal axes, a first end, and a second end opposite the first end. The first end of the burner assembly is adjacent the first end of the shell and the second end of the burner assembly is in the first region of the shell. The burner assemblies are substantially equally spaced apart peripherally around the inner wall and at least two neighboring burner assemblies are substantially equidistant from the reaction chamber. Each burner assembly is adapted to combust at least one fuel, thereby generating a flue gas in the first interior region of the shell. In all other respects, this embodiment is substantially the same as the first embodiment of the apparatus. As in the first embodiment, the reaction chamber(s), which preferably is a tubular device, is a reformer tube. The tubular device may be a reformer radiant tube or a tube-in-tube device.

Yet another embodiment of the invention is similar to the first embodiment of the apparatus but has a plurality of rays of one or more elongated reaction chambers (which may be reformer tubes). Each ray is substantially perpendicular to the inner wall of the shell. The rays divide the cross-sectional area of the shell into a plurality of equally-sized sectors having substantially identical shapes. At least one burner is disposed in each sector. Each of the reaction chambers has a design temperature and a different longitudinal axis substantially parallel to the first longitudinal axis and is substantially symmetrical about the different longitudinal axis. A first portion of each reaction chamber is disposed in the first interior region of the shell and a second portion of each of the reaction chambers is disposed in the second interior region of the shell. The first and second portions of the reaction chambers are adapted to contain a flow of the process fluid. In all other respects, this embodiment is substantially the same as the first embodiment of the apparatus.

Another aspect of the invention is a method for producing a product from a process for heating, reforming, or cracking hydrocarbon fluids or other fluids as defined in claim 12. The process may have a heat requirement for heating the process fluid.

A first embodiment of the method includes multiple steps. The first step is to provide an elongated shell having an inner wall, a first longitudinal axis, a first end, and a second end opposite the first end. The shell is substantially symmetrical about the first longitudinal axis and encloses a first interior region adjacent the first end and a second interior region adjacent the second end. Each of the first and second interior regions is substantially symmetrical about the first longitudinal axis. The second step is to provide at least one elongated reaction chamber having a design temperature and a second longitudinal axis substantially parallel to the first longitudinal axis. The reaction chamber is substantially symmetrical about the second longitudinal axis. A first portion of the reaction chamber is disposed in the first interior region of the shell and a second portion of the reaction chamber is disposed in the second interior region of the shell. The first and second portions of the reaction chamber are adapted to contain a flow of the process fluid. A third step is to provide a plurality of burners adjacent the inner wall, each of the burners being adapted to combust a fuel. The fourth step is to combust at least one fuel in at least one of the burners, thereby producing a flue gas in the first region of the shell and a variable heat flux. The variable heat flux substantially approximates the process heat requirement and simultaneously maximizes the heat flux to substantially all of the first portion of the reaction chamber .while maintaining substantially all of the first portion substantially at the design temperature without substantially exceeding the design temperature. The fifth step is to transfer at least a portion of a flow of the flue gas from the first interior region of the shell to the second interior region of the shell. The sixth step is to feed at least a portion of the process fluid to the reaction chamber, wherein the portion of the process fluid absorbs at least a portion of the heat flux. At least a portion of the process fluid flows through at least the first or second portion of the reaction chamber counter-currently with at least a portion of the flow of the flue gas.

In a preferred embodiment of the method, the reaction chamber(s), which preferably is a tubular device, is a reformer tube. The tubular device may be a reformer radiant tube or tube-in-tube device.

There are many variations of the first embodiment of the method. In one variation, a flame is radially directed from the burner substantially toward the first longitudinal axis of the shell.

Another embodiment of the method is similar to the first embodiment of the method but includes an additional step. The additional step is to withdraw a stream of the product from the reaction chamber. Yet another embodiment of the method is similar to the first embodiment except for the third step and the use of a particular burner arrangement. In the third step of this embodiment, a plurality of elongated burner assemblies are provided adjacent the inner wall. Each of the burner assemblies has a different longitudinal axis substantially parallel to the first and second longitudinal axes, a first end, and a second end opposite the first end. The first end of the burner assembly is adjacent the first end of the shell and the second end of the burner assembly is in the first region of the shell. The burner assemblies are substantially equally spaced apart peripherally around said inner wall and at least two neighboring burner assemblies are substantially equidistant from the reaction chamber. The burner assemblies are adapted to combust at least one fuel. In all other respects, this embodiment is substantially the same as the first embodiment of the method. The reaction chamber in this embodiment may be a reformer tube.

Yet another embodiment of the method is similar to the first embodiment of the method except for the second step. In the second step of this embodiment, a plurality of rays of one or more elongated reaction chambers are provided. Each ray is substantially perpendicular to the inner wall, and the rays divide the cross-sectional area of the shell into a plurality of equally-sized sectors having substantially identical shapes. Each of the reaction chambers has a design temperature and a different longitudinal axis substantially parallel to the first longitudinal axis. Each of the reaction chambers is substantially symmetrical about the different longitudinal axis. A first portion of the reaction chamber is disposed in the first interior region of the shell and a second portion of the reaction chamber is disposed in the second interior region of the shell. The first and second portions of the reaction chamber are adapted to contain a flow of the process fluid. With regard to the fourth step in this embodiment, at least one burner is disposed in each of the sectors. In all other respects, this embodiment is substantially the same as the first embodiment of the method.

### BRIEF DESCRIPTION OF SEVERAL VIEWS OF THE DRAWINGS

The invention will be described by way of example with reference to the accompanying drawings, in which:
Figure 1 is a schematic partial cross-sectional elevation of a prior art reformer;
Figure 2 is a schematic cross-sectional plan view of the prior art reformer shown in Figure1;
Figure 3 is a schematic partial cross-sectional elevation of the apparatus for one embodiment of the invention;
Figure 4 is a schematic cross-sectional plan view of the embodiment of the invention shown in Figure 3;
Figure 5 is a schematic partial cross-sectional evaluation of the apparatus for another embodiment of the invention;
Figure 6 is a schematic cross-sectional plan view of the embodiment of the invention shown in Figure 5;
Figure 7 is a schematic partial cross-sectional evaluation of the apparatus for another embodiment of the invention;
Figures 8, 9 and 10 are schematic cross-sectional plan views of the embodiment of the invention shown in Figure 7;
Figure 11 is a graph illustrating an S curve for a typical reformer tube at design conditions;
Figure 12 is a graph illustrating the maximum heat flux as a function of process gas temperature;
Figure 13 is a graph illustrating an optimal firing profile for a variable heat flux burner;
Figure 14 is a graph illustrating tube heat flux distribution resulting from the optimal firing profile;
Figure 15 is a graph illustrating the temperature distribution for flue gas, tube skin and process gas corresponding to the optimal firing profile;
Figure 16 is a schematic diagram of a side view of one embodiment of a variable heat flux burner system including deflectors;
Figure 17 is a schematic diagram of a front view of the variable heat flux burner system (of Figure 16) without the deflectors;
Figure 18 is a schematic diagram illustrating a variable heat flux burner system including a fuel supply distributor for distributing fuel to the burner units;
Figure 19 is a schematic diagram of a burner tip;
Figure 20 is a schematic diagram of another burner tip;
Figure 21 is a schematic diagram illustrating a burner arrangement generating a flame having a sheet-like shape to provide a variable heat release pattern;
Figure 22 is a schematic diagram illustrating another burner arrangement generating multiple flames to provide a variable heat release pattern; and
Figure 23 is a schematic diagram illustrating another burner arrangement generating multiple flames to provide a variable heat release pattern.

### DETAILED DESCRIPTION OF THE INVENTION

The invention is an apparatus and a method for an advanced reforming process using a variable heat flux side-fired burner system. The invention is not, however, limited to reforming applications. Persons skilled in the art will recognize that the apparatus, method, and burner system may be used in many other fired process heating applications, including but not limited to fluid heating and hydrocarbon cracking (*e*.*g*., ethylene cracking).

The process uses a reformer (or furnace) that has the following features: an integrated side-fired burner that produces a prescribed variable heat flux profile tailored to the process to achieve maximum capacity and maximum thermal efficiency, and avoids coking at the tube inlet; firing on both sides of tubes in the lower region (adjacent the tube outlet) to maximize the heat flux without overheating the tube (in the fired region) and no firing in the upper region, with optimal radiant heat transfer between the process gas and the flue gas due to counter-current flow; radially-directed firing and process tube alignment for optimal heat transfer around the tube circumference; unique burner system design to provide continuous and linear firing with variable heat flux; and optional refractory walls that extend radially from the inner wall of the furnace toward the center of the furnace, wherein the burners fire on both sides of each refractory wall, which helps to achieve the optimal heat flux distribution to the tubes.

Figures 3 and 4 show a schematic of the reformer 20 of the present invention (without optional refractory walls), and Figures 5 and 6 show a schematic of the reformer with optional refractory walls 22. Referring to Figures 3-6, the reformer 20 of the present invention includes a refractory lined shell 24. In a preferred embodiment, the shell is cylindrical. However, persons skilled in the art will recognize that the cross-sectional area of the shell may have alternate shapes, such as a polygon (*e.g.*, a triangle, square, rectangle, pentagon, hexagon, octagon, etc.), an ellipse, or other shapes. Multiple variable heat flux burners 26 are located adjacent the inner wall of the shell 24 near the lower end of the shell. In a preferred embodiment, the burners are recessed in the refractory lining of the inner wall. As shown in Figures 3 and 5, envelopes of the flames 28 are sheet-like. At the upper end of the shell (opposite the burner end), there are one or more openings 30 that allow the flue gas (containing combustion products) to flow from the shell. Conventional reformer tubes 32 containing catalyst are positioned within the interior of the shell to utilize high intensive radiant heat directly from the flames of the burners. In the preferred embodiment, the burners are equally spaced apart peripherally around the inner wall of the reformer, with neighboring burners being equidistant from one or more reformer tubes positioned in a vertical plane midway between the neighboring burners.

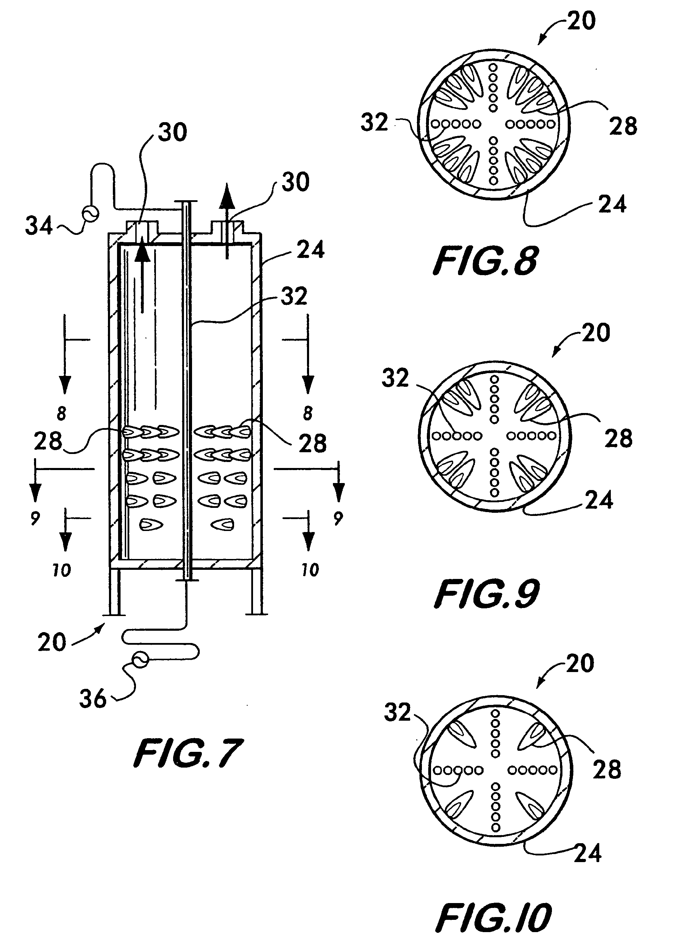

Persons skilled in the art will recognize that the burners may be arranged differently in other embodiments, one of which is illustrated in Figures 7-10. As shown in Figure 7, one or more burners 28 may be arranged within each of the (four) sectors of the reformer 20 to achieve the desired variable heat flux profile to the tubes 32 in the lower region of the reformer. As shown in Figures 8, 9 and 10, multiple burners are fired in each pie-shaped sector ("quadrant") at different elevations on both sides of tubes arranged in a given ray of tubes. Figure 8 shows three burners firing within each quadrant and within a given slice of the reformer as a means of increasing the heat release rate within that slice of the furnace. Figure 9 shows two burners firing within each quadrant and within a given slice of the reformer as a means of increasing the heat release rate within that slice of the furnace. And Figure 10 shows one burner firing within each quadrant and within a given slice of the reformer as a means of increasing the heat release rate within that slice of the furnace. The burners in Figures 7-10 are arranged as shown to ensure that the amount of heat that a given segment of each tube receives is approximately equal. (Persons skilled in the art will recognize that many burner arrangements other than that shown in Figures 7-10 are feasible. For example, one or more additional burners could be added in each sector at each elevation in Figures 8-10.)

In the preferred embodiment, the tubes 32 are arranged in four sectors of the reformer 20 and one variable heat flux burner 28 is located at the inner wall in each sector, as shown in Figures 4 and 6. (Persons skilled in the art will recognize that the reformer may be evenly divided into any number of equally-sized sectors with a ray of tubes in each sector.) Each burner produces a substantially continuous flame along the height of the burner. The flame front only extends a short distance from the burner toward the centerline of the reformer. Heat is radiated directly from the flame and the burner tile to the tubes and is emitted and reflected from the inner wall. Mixed-feed enters the inlet header 34 and is distributed to the upper end of each reformer tube 32. Product synthesis gas exits at the lower end of each reformer tube and is removed from the reformer at the outlet header 36, and the flue gas exits from openings 30 at the top of the reformer.

Figures 5 and 6 show a reformer that incorporates four vertical refractory walls 22, one in each sector. The hot flue gases (containing combustion products) flow radially across both sides of each refractory wall, which is thereby heated and radiates heat to the tubes. The refractory walls 22 are perpendicular to the inner wall of the shell 24. These refractory walls may be made of a composite of conventional refractory materials, such as high temperature fired bricks, or a solid casting of a refractory, such as alumina.

Fuel is fired in the lower region of the reformer 20. The fuel is fired via the variable heat flux burners 26, which produce a prescribed heat flux profile along the tube length - - one that is tailored to the specific requirements of the process (reforming, or cracking, or other) taking place inside the tube. This prescribed heat flux profile simultaneously addresses constraints such as design tube metal temperature and coking, and maximizes average heat flux (capacity) and thermal efficiency.

The heat flux profile produced by the variable heat flux burner 26 is designed to radiate the maximum amount of heat to each segment of the tube 32 in the fired zone without exceeding the tube design temperature limits. The objective is to provide the maximum possible heat flux through each tube segment that is located in the vicinity of the process outlet. (For reforming applications, the maximum heat flux is tied to the reforming reaction process that occurs as the gas flows through the tube.) As an intentional result, the tube wall temperature is maintained at a uniform value over most of the entire fired length of the tube.

For a cylindrical reformer design, each variable heat flux burner 26 is located along the inner wall of the reformer 20 mid-way between two rays of tubes 32 (as illustrated in Figures 4 and 6), and an optional refractory wall 22 extends in the radial direction along the center line of each burner (as illustrated in Figure 6). The optional refractory walls are incorporated along the height of the fired region, but not in the unfired region. The refractory walls are used to ensure that the optimal heat flux distribution is attained in the fired region.

In the preferred embodiment, each variable heat flux burner 26 fires fuel substantially continuously over the height of the reformer 20 occupied by the burner. The heat release intensity per unit length of the burner is very low and varies smoothly along the height of the burner.

The firing rate per burner 26 can be varied for startup and operation at reduced production rates. An objective is to achieve the same relative heat release profile (% of total heat release versus burner height) over the burner capacity range. (Persons skilled in the art will recognize that an adjustable burner could be designed to vary the relative heat release profile.) In this way, the variable heat flux profile produced by the burner satisfies all of the constraints (*e.g*., tube temperature, coking problem) over the turndown range. At turndown conditions, the tube wall temperature will again be similar to design conditions, only cooler.

For the configurations shown in Figures 3 and 5, combustion products flow upward. The combustion products produced by the lower sections of the variable heat flux burners 26 combine with the combustion products produced by the upper sections of the burners and flow upward.

The upper region of the reformer 20 is not fired. The flue gas (containing combustion products) flows counter-currently with the incoming process gas and exits at the top of the reformer. Counter-current flow helps to maximize the heat flux to the tubes in the upper region of the furnace by maximizing the temperature driving force.

This arrangement helps to maximize throughput (capacity) while simultaneously achieving maximum possible radiant efficiency. The improvement in radiant efficiency at reduced rates will be even better than any improvement realized with co-current reforming technology.

The burner and tile design, as well as the design layout of the reforming tubes 32, achieve a uniform heat flux at each elevation in the reformer 20, both around the circumference of individual tubes and from tube to tube. As a result, the ratio of the peak heat flux to the worst tube (tube with the maximum local heat flux at a given elevation) and the average heat flux to all the tubes at the same elevation is held as close to unity as possible. The optional refractory walls 22 further ensure that this challenging objective is met.

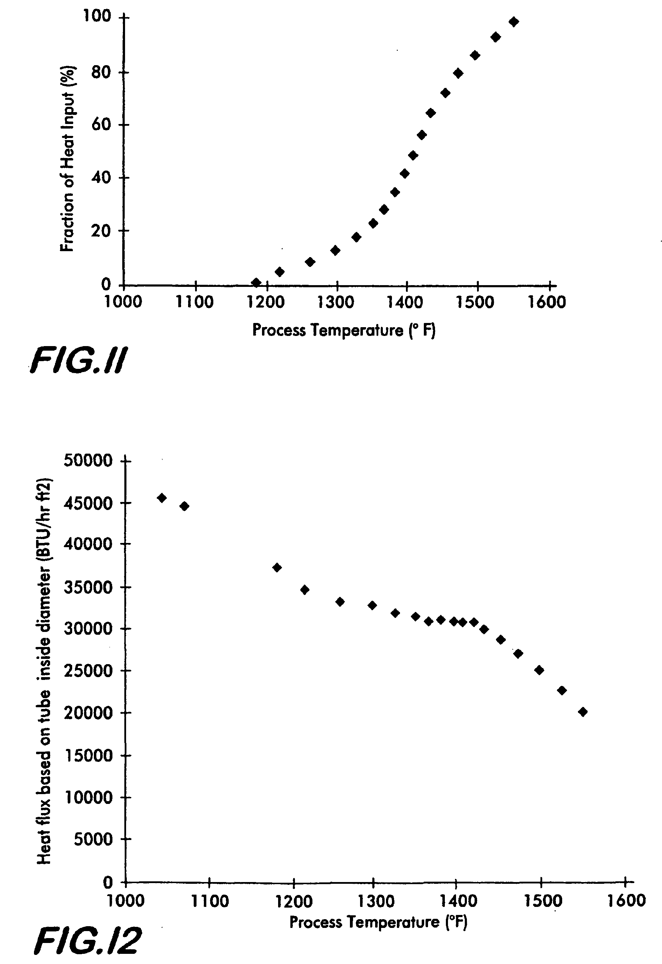

Figure 11 plots the process duty-process temperature curve, also known as an S curve, for typical reformer tube design conditions (space velocity, catalyst size and shape, end-of-run catalyst activity). This plot is obtained from a steam methane reformer simulation program. At a given distance from the inlet of the tube, an amount of heat is transferred to the process gas that causes both the sensible and chemical enthalpy of the process gas to increase. The S curve plots the fraction of heat absorbed (from the inlet to a given point inside the tube) versus the process gas temperature at that point.

The reformer tube is designed for a given operating life corresponding with specified limits on tube wall temperature and process pressure. Once the local conditions inside of the tube are known, it is possible to calculate the maximum local heat flux that the tube can sustain. Figure 12 plots the maximum heat flux as a function of the process temperature for the conditions corresponding to Figure 11.

From the above discussion, it is clear that limits exist on the magnitude of heat flux to the tube and these limits depend on the process temperature and extent of the reforming reaction. This information is of key importance in specifying the design requirements of the variable heat flux burner for the side-fired application. To maximize the reformer efficiency with downward process flow, it is desirable to maximize the firing in the bottom region of the reformer and to allow counter-current heat exchange between the combustion products and incoming process gas.

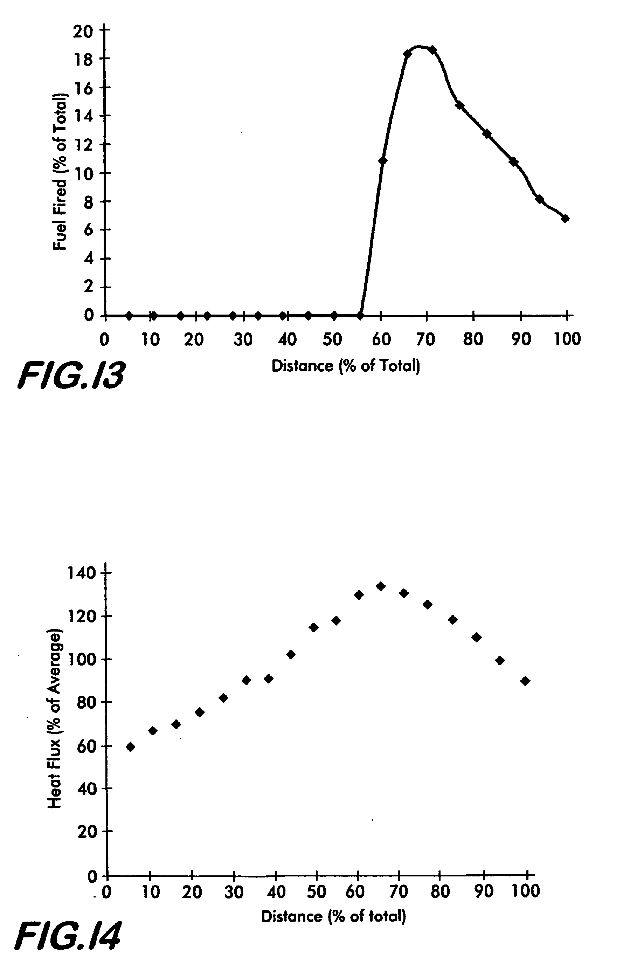

Figure 13 illustrates the shape of the optimal firing profile for reforming natural gas with steam to produce hydrogen. This profile is for one specified design tube metal temperature and specific fixed process conditions. In other words, the reformer tubes are designed for one temperature and the process conditions of temperature and pressure are fixed, as is the capacity (*i*.*e*., fixed amounts of natural gas and steam are fed to the reformer). The amount of fuel fired per unit increment of reformer height tends to increase from a low value at the bottom of the reformer. The amount of fuel fired to the upper-most section of the burner tends to be less than the amount set by tube temperature constraints (reach target on total firing duty).

Figure 14 shows the corresponding tube heat flux profile. In the fired region, the heat flux reaches the maximum heat flux limits as shown in Figure 12. In the unfired region, the heat fluxes are below these limits.

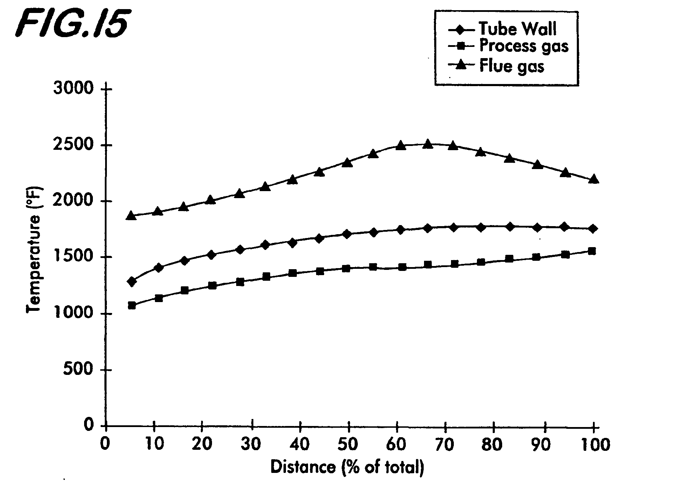

Figure 15 plots the corresponding temperature profiles for flue gas, tube wall and process gas. In the fired region, the tube wall temperature is held at the design limits. With counter-current flow, the difference between the flue gas and tube wall temperatures is maximized and the temperature profiles do not pinch at the flue gas exit.

The advantages of the novel burner and arrangement of the present invention include:
the variable heat flux burner produces the desired heat flux profile along the tube to maintain relatively constant reformer tube metal temperature in the fired region;
fewer burners, piping, valves and instrumentation are required, thereby minimizing capital cost for the reformer, or heater, or ethylene cracker; and
the furnace (or reformer) is capable of producing higher capacity and higher radiant efficiency.

Also, the unique placement of the variable heat flux burner solves the coking problem that occurs at the tube inlet (in conventional reformers) and extends run time between catalyst changes.

In a typical commercial reformer, such as that illustrated schematically in Figure 1, process gas flow is upward and the reformer 10 is up-fired from three burners 12 located near the center of the furnace floor. The reformer contains tubes in a cylindrical arrangement.

**Table 1. Comparison of physical configuration**

| Reformer Design | Prior Art | Present Invention |
|---|---|---|
| Number of burners | 3 | 4 |
| Firing direction | Upward | Side |
| Process flow direction | Upward | Downward |

In comparing a typical commercial reformer with a reformer according to the present invention, the following parameters were kept at the same values for both reformers for the comparison:
inside furnace diameter;
inside furnace height;
reformer tube design temperature and pressure;
catalyst activity;
catalyst size and shape (single hole);
air preheat temperature; and
steam-to-carbon (S/C) ratio,

The following benefits of the reformer according to the present invention were expected in making this comparison:
30% increase in H₂ production capacity (with same size furnace);
12% less firing per unit H₂ production;
convection section is smaller because of 12% reduction in flue gas flow;
38% less catalyst per unit H₂ production;
40% less tube material per unit H₂ capacity; and
40% increase in average heat flux based on inside tube surface area.

Additional work also was done to examine the heat flux distributions within this novel reformer which utilizes variable heat flux burners. The results indicate (for a furnace with 4 sectors) that the heat flux around the tubes and from tube to tube is expected to be uniform at each elevation.

Figures 16-23 show several arrangements of the variable heat flux burner 26. (Persons skilled in the art will recognize that other burner arrangements are possible.) An important feature of the burner used in the preferred embodiment of the present invention is that it is a relatively long burner, preferably oriented in the vertical direction on the inner wall of the reformer 20. To be flexible, the burner may be divided into multiple sections, as shown in Figures 16-18. But all sections preferably share a common air supply 38 and a common fuel supply 40. This way, the piping, valves, and controls are simplified. Each section has a predetermined firing pattern. When joined together, the multi-section burner produces a heat release profile that optimally matches for the process conditions.

As shown in Figures 16-18, each section has the same way of introducing fuel and air that produces a compact flame, similar to a conventional wall radiant burner. But it is stressed that Figures 16-18, show a single burner 26 with multiple sections, rather than multiple burners, because all sections share a common air supply 38, a common fuel supply 40, and a common burner control system (not shown).

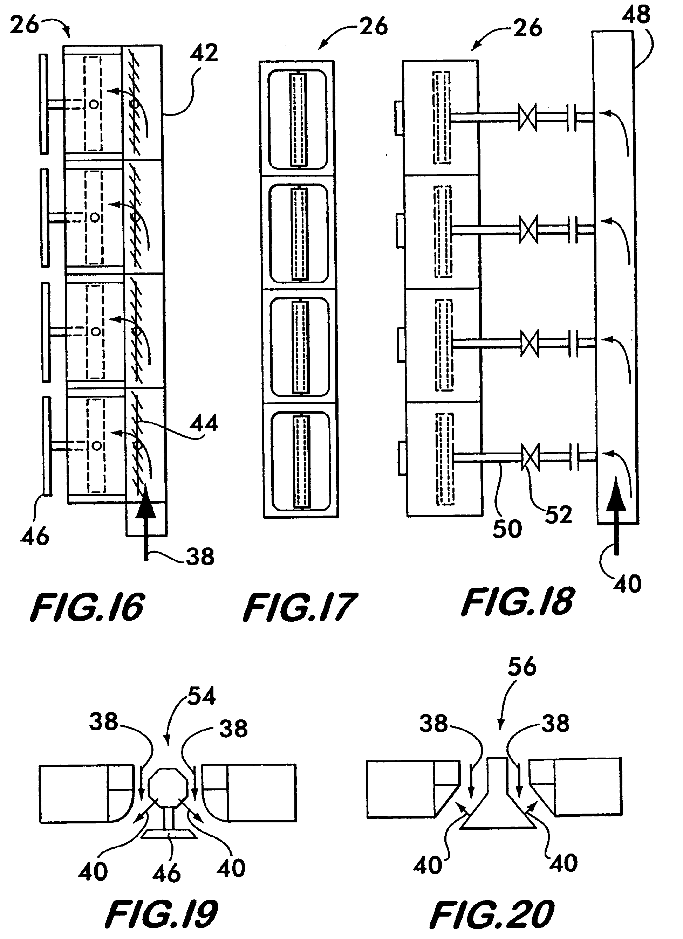

Figure 16 is a side view of one design of a variable heat flux burner 26 used in the present invention. Air 38 enters a conduit 42 at the bottom or top of the burner and air flow to each burner unit or section is regulated by a damper 44. A flame deflector 46 may be associated with each burner unit or section to shape the flame. Figure 17 provides a view of the burner without deflectors as viewed from inside the reformer 20. Figure 18 provides a view of the burner from outside of the reformer 20 showing the supply of fuel 40 to the individual burner units or sections via a distribution system including a manifold 48, piping 50 and control valves 52. Different types of burner tips may be used with the burner 26. Figure 19 is a schematic of one such burner tip 54, and Figure 20 is a schematic of another such burner tip 56.

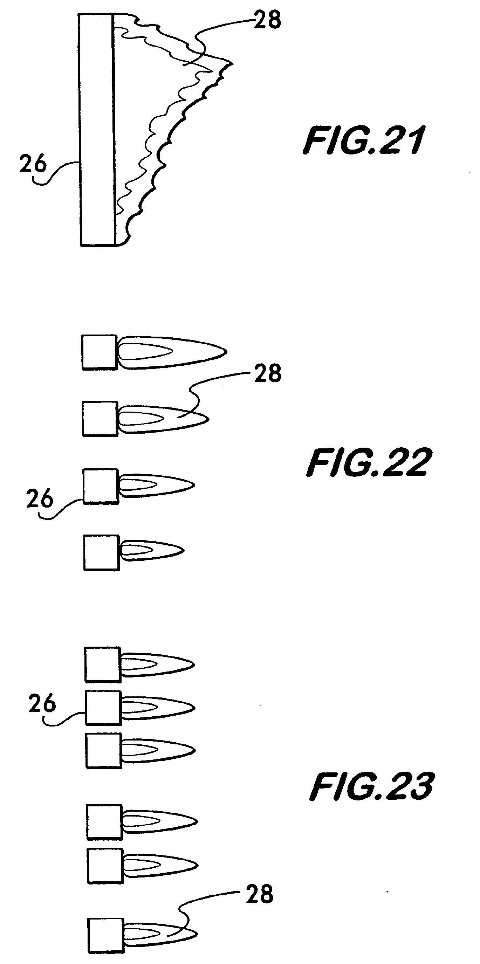

As indicated, the flame 28 in the preferred embodiment has a sheet-like shape shown in Figure 3 and also in Figure 21. The sheet-like shape may be generated from a variable heat flux burner 26 such as that illustrated in Figures 16-18. However, other burner arrangements and flame shapes, such as those shown in Figures 22 and 23, also may be used to generate the variable heat release pattern in the present invention. For the arrangement illustrated in Figure 22, the burner units are equally spaced but each unit is designed to fire at a different firing rate to generate a variable heat release pattern. For the arrangement illustrated in Figure 23, all burner units are designed to fire at the same firing rate and the spacing between burner units is varied to provide a variable heat release pattern. A variable burner unit spacing can also be combined with burner units designed to fire at different rates to achieve the prescribed heat flux profile.

Although each burner unit in the preferred embodiment of the invention burns the same fuel, different fuels may be used in alternate embodiments. For example, selected burner units may be designed to fire a liquid fuel (such as naphtha) and other burner units may be designed to burn a gaseous fuel (such as the offgas produced from pressure swing adsorption). It also is feasible for selected burner units to be designed to fire a mixture of fuels (such as a mixture of natural gas and offgas from pressure swing adsorption).

Although illustrated and described herein with reference to certain specific embodiments, the present invention is nevertheless not intended to be limited to the details shown. Rather, various modifications may be made in the details within the scope and range of equivalents of the claims.

## Claims

1. An apparatus for heating, reforming, or cracking hydrocarbon fluids or other fluids in a process having a process heat requirement for heating a process fluid in the process, comprising:
an elongated shell (24) having an inner wall, a first longitudinal axis, a first end, and a second end opposite said first end, said shell (24) being substantially symmetrical about said first longitudinal axis and enclosing a first interior region adjacent the first end and a second interior region adjacent the second end, each of said first and second interior regions being substantially symmetrical about said first longitudinal axis;
at least one elongated reaction chamber (32) having a design temperature and a second longitudinal axis substantially parallel to said first longitudinal axis, said reaction chamber (32) being substantially symmetrical about said second longitudinal axis, a first portion of said reaction chamber (32) being disposed in said first interior region of said shell (24) and a second portion of said reaction chamber (32) being disposed in said second interior region of said shell (24), said first and second portions of said reaction chamber (32) adapted to contain a flow of said process fluid;
a plurality of burners (26) adjacent said inner wall in the first interior region, each of said burners (26) adapted to combust at least one fuel, thereby producing a flue gas in said first interior region of said shell (24); said combustion occurring adjacent to the reaction chamber (32) outlet, such that at least a portion of said process fluid flows through at least the first or second portion of said reaction chamber (32) counter-currently with at least a portion of said flow of said flue gas; and
transfer means adjacent the second end of said shell (24), whereby at least a portion of a flow of said flue gas flows from the first interior region of said shell (24) to the second interior region of said shell (24),
said plurality of burners (26) adapted to produce a variable heat flux substantially approximating said process heat requirement and simultaneously maximizing said heat flux to substantially all of said first portion of said reaction chamber (32) while maintaining substantially all of the first portion substantially at said design temperature without substantially exceeding said design temperature.

2. An apparatus as in claim 1, wherein a substantial portion of said reaction chamber (32) is substantially vertical within said shell (24).

3. An apparatus as in claim 1, wherein said shell (24) is substantially cylindrical.

4. An apparatus as in claim 1, wherein said shell (24) has a cross-sectional area substantially in the form of an ellipse.

5. An apparatus as in claim 1, wherein said shell (24) has a cross-sectionally in the form of a polygon.

6. An apparatus as in claim 1, wherein a flame is radially directed from said burner (26) substantially toward said first longitudinal axis of said shell (24).

7. An apparatus as in claim 1, further comprising at least one refractory wall disposed wall disposed in said shell (24) adjacent said burner, said refractory wall being substantially perpendicular to said inner wall.

8. An apparatus as in claim 1, wherein the or each reaction chamber (32) is formed by a reformer tube (32).

9. An apparatus as in claim 1, wherein said plurality of burners is formed by elongated burner assemblies (10) having a different longitudinal axis substantially parallel to said first and second longitudinal axis, a first end, and a second end opposite said first end, the first end of said burner assembly (26) being adjacent the first end of said shell (24) and the second end of the burner assembly (26) being in said first region of said shell (24), said burner assembly (26) being substantially equally spaced apart peripherally around said inner wall and at least two neighboring burner assemblies (26) being substantially equidistant from said reaction chamber.

10. An apparatus as in claim 9, wherein said reaction chamber (32) is a reformer tube (32).

11. An apparatus as in claim 1, wherein said one or more elongated reaction chambers (32) provide a plurality of rays, each ray being substantially perpendicular to said inner wall, said rays dividing said cross-sectional area into a plurality of equally-sized sectors having substantially identical shapes, each of said reaction chambers (32) having a design temperature and a different longitudinal axis substantially parallel to said first longitudinal axis and being substantially symmetrical about said different longitudinal axis, and
wherein at least one burner (26) is disposed in each said sector.

12. A method for producing a product from a process for heating, reforming or cracking hydrocarbon fluids or other fluids, the process having a process heat requirement for heating a process fluid, comprising the steps of:
providing an elongated shell (32) having an inner wall, a first longitudinal axis, a first end, and a second end opposite said first end, said shell (24) being substantially symmetrical about said first longitudinal axis and enclosing a first interior region adjacent the first end and a second interior region adjacent the second end; each of said first and second interior regions being substantially symmetrical about said first longitudinal axis;
providing at least one elongated reaction chamber (32) having a design temperature and a second longitudinal axis substantially parallel to said first longitudinal axis, said reaction chamber (32) being substantially symmetrical about said second longitudinal axis, a first portion of said reaction chamber being disposed in said first interior region of said shell (24) and a second portion of said reaction chamber (32) being disposed in said second interior region of said shell (24), said first and second portions of said reaction chamber (32) adapted to contain a flow of said process fluid;
providing a plurality of burners (26) adjacent said inner wall in the first interior region, each of said burners (26) adapted to combust at least one fuel;
combusting said at least one fuel in at least one of said burners (26), thereby producing a flue gas in said first region of said shell (24); said combustion occurring adjacent to the reaction chamber (32) outlet, such that at least a portion of said process fluid flows through at least the first or second portion of said reaction chamber (32) counter-currently with at least a portion of said flow of said flue gas;
transferring at least a portion of a flow of said flue gas from said first interior region of said shell (24) to said second interior region of said shell (24); and
feeding at least a portion of said process fluid to said reaction chamber (32), wherein said portion of said process fluid absorbs at least a portion of said heat flux,
by combusting said at least one fuel in at least one of said plurality of burners (26) a variable heat flux is produced substantially approximating said process heat requirement and simultaneously maximizing said heat flux to substantially all of said first portion of said reaction chamber (32) while maintaining substantially all of said first portion substantially at said design temperature without substantially exceeding said design temperature.

13. A method as in claim 12, comprising the further step of withdrawing a stream of the product from said reaction chamber (32).

14. A method as in claim 12, wherein a flame is radially directed from said burner (26) substantially toward said first longitudinal axis of said shell (24).

15. A method as in claim 12, wherein the or each elongated reaction chamber (32) is formed by a reformer tube.

16. A method as in claim 12, comprising the additional step:
providing a plurality of elongated burner assemblies (26) each having a different longitudinal axis substantially parallel to said first and second longitudinal axis, a first end and a second end opposite said first end, the first end of said burner assembly (26) being adjacent the first end of said shell (24) and the second end of said burner assembly (26) being in said first region of said shell (24), said burner assemblies (26) being substantially equally spaced apart peripherally around said inner wall and at least two neighboring burner assemblies being substantially equidistant from said reaction chamber (32).

17. A method as in claim 16, wherein the or each reaction chamber (32) is a reformer tube.

18. A method as in claim 12, comprising the additional step:
providing a plurality of rays of one or more elongated reaction chambers (32), each ray being substantially perpendicular to said inner wall, said rays dividing said cross-sectional area into a plurality of equally-sized sectors having substantially identical shapes, each of said reaction chambers (32) having a design temperature and a different longitudinal axis substantially parallel to said first longitudinal axis, and being substantially symmetrical about said different longitudinal axis, a first portion of each said reaction chamber (32) being disposed in said first interior region of said shell (24) and a second portion of each said reaction chamber (32) being disposed in said second interior region of said shell (24), said first and second portions or said reaction chamber (32) adapted to contain a flow of said process fluid;
wherein at least one burner (26) is disposed in each said sector.

## Patentansprüche

1. Apparat zum Erwärmen, Reformieren oder Kracken von Kohlenwasserstofffluids oder anderen Fluiden in einem Verfahren mit einem Prozesswärmebedarf zum Erwärmen eines Prozessfluids im Verfahren, umfassend:
ein längliches Gehäuse (24) mit einer Innenwand, einer ersten Längsachse, einem ersten Ende und einem zweiten Ende gegenüber dem ersten Ende, wobei das Gehäuse (24) im Wesentlichen symmetrisch um die erste Längsachse liegt und einen ersten, dem ersten Ende benachbarten Innenbereich und einen zweiten, dem zweiten Ende benachbarten Innenbereich einschließt, wobei der erste und der zweite Innenbereich jeweils im Wesentlichen symmetrisch um die erste Längsachse liegen;
mindestens eine längliche Reaktionskammer (32) mit einer vorgegebenen Temperatur und einer zweiten Längsachse, die im Wesentlichen parallel zur ersten Längsachse liegt, wobei die Reaktionskammer (32) im Wesentlichen symmetrisch um die zweite Längsachse liegt, wobei ein erster Teil der Reaktionskammer (32) im ersten Innenbereich des Gehäuses (24) angeordnet ist und ein zweiter Teil der Reaktionskammer (32) im zweiten Innenbereich des Gehäuses (24) angeordnet ist, wobei der erste und der zweite Teil der Reaktionskammer (32) dazu bestimmt sind, einen Strom des Prozessfluids zu enthalten;
eine Vielzahl von Brennern (26), die der Innenwand des ersten Innenbereichs benachbart sind, wobei jeder der Brenner (26) dazu bestimmt ist, mindestens einen Brennstoff zu verbrennen und **dadurch** ein Verbrennungsgas im ersten Innenbereich des Gehäuses (24) zu erzeugen; wobei die Verbrennung nahe dem Auslass der Reaktionskammer (32) stattfindet, so dass zumindest ein Teil des Prozessfluids im Gegenstrom mit mindestens einem Teil des Stroms des Verbrennungsgases durch mindestens den ersten oder zweiten Teil der Reaktionskammer (32) fließt; und
ein Übertragungsmittel benachbart dem zweiten Ende des Gehäuses (24), wodurch zumindest ein Teil des Stroms des Verbrennungsgases aus dem ersten Innenbereich des Gehäuses (24) zum zweiten Innenbereich des Gehäuses (24) fließt,
wobei die Vielzahl von Brennern (26) dazu bestimmt ist, einen variablen Wärmestrom zu erzeugen, der dem Prozesswärmebedarf im Wesentlichen nahe kommt, und gleichzeitig den Wärmefluss zu im Wesentlichen dem gesamten ersten Teil der Reaktionskammer (32) zu maximieren, während im Wesentlichen der ganze erste Teil im Wesentlichen auf der vorgegebenen Temperatur gehalten wird, ohne diese vorgegebene Temperatur wesentlich zu überschreiten.

2. Apparat nach Anspruch 1, bei dem ein wesentlicher Teil der Reaktionskammer (32) im Wesentlichen vertikal innerhalb des Gehäuses (24) liegt.

3. Apparat nach Anspruch 1, bei dem das Gehäuse (24) im Wesentlichen zylindrisch ist.

4. Apparat nach Anspruch 1, bei dem das Gehäuse (24) einen Querschnittsbereich im Wesentlichen in Form einer Ellipse aufweist.

5. Apparat nach Anspruch 1, bei dem das Gehäuse (24) einen Querschnitt in Form eines Vielecks hat.

6. Apparat nach Anspruch 1, bei dem eine Flamme vom Brenner (26) radial im Wesentlichen auf die erste Längsachse des Gehäuses (24) gerichtet wird.

7. Apparat nach Anspruch 1, der außerdem mindestens eine feuerfeste Wand umfasst, die im Gehäuse (24) dem Brenner benachbart angeordnet ist, wobei die feuerfeste Wand im Wesentlichen senkrecht zur Innenwand ist.

8. Apparat nach Anspruch 1, bei dem die oder jede Reaktionskammer (32) durch ein Reformierrohr (32) gebildet wird.

9. Apparat nach Anspruch 1, bei dem die Vielzahl von Brennern gebildet wird durch längliche Brenneranordnungen (10) mit einer unterschiedlichen Längsachse im Wesentlichen parallel zur ersten und zweiten Längsachse, einem ersten Ende und einem zweiten, dem ersten Ende gegenüberliegenden Ende, wobei das erste Ende der Brenneranordnung (26) dem ersten Ende des Gehäuses (24) benachbart ist und das zweite Ende der Brenneranordnung (26) sich im ersten Bereich des Gehäuses (24) befindet, wobei die Brenneranordnung (26) im Wesentlichen gleichmäßig peripher um die Innenwand beabstandet ist und mindestens zwei benachbarte Brenneranordnungen (26) im Wesentlichen einen gleichen Abstand von der Reaktionskammer haben.

10. Apparat nach Anspruch 9, bei dem die Reaktionskammer (32) ein Reformierrohr (32) ist.

11. Apparat nach Anspruch 1, bei dem eine oder mehrere der länglichen Reaktionskammern (32) eine Vielzahl von Strahlen bereitstellen, wobei jeder Strahl im Wesentlichen senkrecht zur Innenwand ist, wobei die Strahlen den Querschnittsbereich in eine Vielzahl gleich großer Sektoren von im Wesentlichen identischer Form teilen, wobei jede der Reaktionskammern (32) eine vorgegebene Temperatur hat und eine unterschiedliche Längsachse im Wesentlichen parallel zur ersten Längsachse und im Wesentlichen symmetrisch um die unterschiedliche Längsachse aufweist, und wobei mindestens ein Brenner (26) in jedem Sektor angeordnet ist.

12. Verfahren zur Herstellung eines Produkts aus einem Verfahren zum Erwärmen, Reformieren oder Kracken von Kohlenwasserstofffluids oder anderen Fluiden, wobei das Verfahren einen Prozesswärmebedarf zum Erwärmen eines Prozessfluids hat, umfassend folgende Schritte:
die Bereitstellung eines länglichen Gehäuses (24) mit einer Innenwand, einer ersten Längsachse, einem ersten Ende und einem zweiten Ende gegenüber dem ersten Ende, wobei das Gehäuse (24) im Wesentlichen symmetrisch um die erste Längsachse liegt und einen ersten, dem ersten Ende benachbarten Innenbereich und einen zweiten, dem zweiten Ende benachbarten Innenbereich einschließt, wobei der erste und der zweite Innenbereich jeweils im Wesentlichen symmetrisch um die erste Längsachse liegen;
die Bereitstellung mindestens einer länglichen Reaktionskammer (32) mit einer vorgegebenen Temperatur und einer zweiten Längsachse, die im Wesentlichen parallel zur ersten Längsachse liegt, wobei die Reaktionskammer (32) im Wesentlichen symmetrisch um die zweite Längsachse liegt, wobei ein erster Teil der Reaktionskammer im ersten Innenbereich des Gehäuses (24) angeordnet ist und ein zweiter Teil der Reaktionskammer (32) im zweiten Innenbereich des Gehäuses (24) angeordnet ist, wobei der erste und der zweite Teil der Reaktionskammer (32) dazu bestimmt sind, einen Strom des Prozessfluids zu enthalten;
die Bereitstellung einer Vielzahl von Brennern (26), die der Innenwand des ersten Innenbereichs benachbart sind, wobei jeder der Brenner (26) dazu bestimmt ist, mindestens einen Brennstoff zu verbrennen;
das Verbrennen des mindestens einen Brennstoffs in mindestens einem der Brenner (26) und **dadurch** das Erzeugen eines Verbrennungsgases im ersten Bereich des Gehäuses (24); wobei die Verbrennung nahe dem Auslass der Reaktionskammer (32) stattfindet, so dass zumindest ein Teil des Prozessfluids im Gegenstrom mit mindestens einem Teil des Stroms des Verbrennungsgases durch mindestens den ersten oder zweiten Teil der Reaktionskammer (32) fließt; und
die Übertragung mindestens eines Teils eines Stroms des Verbrennungsgases aus dem ersten Innenbereich des Gehäuses (24) in den zweiten Innenbereichs des Gehäuses (24); und
das Einspeisen mindestens eines Teils des Prozessfluids in die Reaktionskammer (32), wobei dieser Teil des Prozessfluids zumindest einen Teil des Wärmeflusses absorbiert,
wobei durch Verbrennen des mindestens einen Brennstoffs in mindestens einem der Vielzahl von Brennern (26) ein variabler Wärmefluss erzeugt wird, der im Wesentlichen dem Prozesswärmebedarf entspricht und gleichzeitig den Wärmefluss zu dem im Wesentlichen ganzen ersten Teil der Reaktionskammer (32) maximiert, während gleichzeitig der gesamte erste Teil im Wesentlichen auf der vorgegebenen Temperatur gehalten wird, ohne diese vorgegebene Temperatur wesentlich zu überschreiten.

13. Verfahren nach Anspruch 12, das außerdem den Schritt des Abziehens eines Stroms des Produkts aus der Reaktionskammer (32) umfasst.

14. Verfahren nach Anspruch 12, bei dem eine Flamme radial vom Brenner (26) im Wesentlichen auf die erste Längsachse des Gehäuses (24) gerichtet wird.

15. Verfahren nach Anspruch 12, bei dem die oder jede längliche Reaktionskammer (32) durch ein Reformierrohr gebildet wird.

16. Verfahren nach Anspruch 12, umfassend den zusätzlichen Schritt
der Bereitstellung einer Vielzahl länglicher Brenneranordnungen (26), die jeweils aufweisen: eine unterschiedliche Längsachse im Wesentlichen parallel zur ersten und zweiten Längsachse, ein erstes Ende und ein zweites dem ersten Ende gegenüberliegendes Ende, wobei das erste Ende der Brenneranordnung (26) dem ersten Ende des Gehäuses (24) benachbart ist und das zweite Ende der Brenneranordnung (26) im ersten Bereich des Gehäuses (24) ist, wobei die Brenneranordnungen (26) im Wesentlichen gleichmäßig peripher um die Innenwand voneinander beabstandet sind und der Abstand von mindestens zwei benachbarten Brenneranordnungen von der Reaktionskammer (32) im Wesentlichen gleich ist.

17. Verfahren nach Anspruch 16, bei dem die oder jede Reaktionskammer (32) ein Reformierrohr ist.

18. Verfahren nach Anspruch 12, umfassend den zusätzlichen Schritt der
Bereitstellung einer Vielzahl von Strahlen aus einer oder mehreren länglichen Reaktionskammern (32), wobei jeder Strahl im Wesentlichen senkrecht zur Innenwand ist, wobei die Strahlen den Querschnittsbereich in eine Vielzahl gleich großer Sektoren von im Wesentlichen identischer Form teilen, wobei jede der Reaktionskammern (32) eine vorgegebene Temperatur hat und eine unterschiedliche Längsachse im Wesentlichen parallel zur ersten Längsachse und im Wesentlichen symmetrisch um die unterschiedliche Längsachse aufweist, wobei ein erster Teil jeder Reaktionskammer (32) im ersten Innenbereich des Gehäuses (24) und ein zweiter Teil jeder Reaktionskammer (32) im zweiten Innenbereich des Gehäuses (24) angeordnet ist, wobei der erste und der zweite Teil der Reaktionskammer (32) dazu bestimmt sind, den Strom des Prozessfluids zu enthalten,
wobei mindestens ein Brenner (26) in jedem Sektor angeordnet ist.

## Revendications

1. Appareil pour chauffer, reformer ou craquer des fluides hydrocarbures ou d'autres fluides dans un procédé ayant une exigence de chauffage de procédé pour chauffer un fluide de procédé dans le procédé, comprenant :
une coque allongée (24) comportant une paroi interne, un premier axe longitudinal, une première extrémité et une seconde extrémité opposée à ladite première extrémité, ladite coque (24) étant sensiblement symétrique autour dudit premier axe longitudinal et enfermant une première région intérieure adjacente à la première extrémité et une seconde région intérieure adjacente à la seconde extrémité, chacune desdites première et seconde régions intérieures étant sensiblement symétriques autour dudit premier axe longitudinal ;
au moins une chambre de réaction allongée (32) ayant une température de conception et un second axe longitudinal sensiblement parallèle audit premier axe longitudinal, ladite chambre de réaction (32) étant sensiblement symétrique autour dudit second axe longitudinal, une première portion de ladite chambre de réaction (32) étant disposée dans ladite première région intérieure de ladite coque (24) et une seconde portion de ladite chambre de réaction (32) étant disposée dans ladite seconde région intérieure de ladite coque (24), lesdites première et seconde portions de ladite chambre de réaction (32) étant adaptées pour contenir un écoulement dudit fluide de procédé ;
une pluralité de brûleurs (26) adjacents à ladite paroi interne dans la première région intérieure, chacun desdits brûleurs (26) étant adapté pour brûler au moins un carburant, produisant ainsi des gaz brûlés dans ladite première région intérieure de ladite coque (24) ; ladite combustion se produisant adjacente à la sortie de la chambre de réaction (32), de telle sorte qu'au moins une portion dudit fluide de procédé s'écoule à travers au moins la première ou seconde portion de ladite chambre de réaction (32) à contre-courant avec au moins une portion dudit écoulement desdits gaz brûlés ; et
des moyens de transfert adjacents à la seconde extrémité de ladite coque (24), moyennant quoi au moins une portion d'un écoulement desdits gaz brûlés s'écoule de la première région intérieure de ladite coque (24) à la seconde région intérieure de ladite coque (24),
ladite pluralité de brûleurs (26) étant adaptés pour produire un flux de chaleur variable approximant sensiblement ladite exigence de chauffage de procédé et maximisant simultanément ledit flux de chaleur à quasiment toute ladite première portion de ladite chambre dé réaction (32) tout en maintenant quasiment toute la première portion sensiblement à ladite température de conception sans excéder sensiblement ladite température de conception.

2. Appareil selon la revendication 1, dans lequel une portion substantielle de ladite chambre de réaction (32) est sensiblement verticale à l'intérieur de ladite coque (24).

3. Appareil selon la revendication 1, dans lequel ladite coque (24) est sensiblement cylindrique.

4. Appareil selon la revendication 1, dans lequel ladite coque (24) a une aire en coupe transversale sensiblement de la forme d'une ellipse.

5. Appareil selon la revendication 1, dans lequel ladite coque (24) est en forme de polygone en coupe transversale.

6. Appareil selon la revendication 1, dans lequel une flamme est dirigée radialement à partir dudit brûleur (26) sensiblement vers ledit premier axe longitudinal de ladite coque (24).

7. Appareil selon la revendication 1, comprenant en outre au moins une paroi réfractaire disposée dans ladite coque (24) adjacente audit brûleur, ladite paroi réfractaire étant sensiblement perpendiculaire à ladite paroi interne.

8. Appareil selon la revendication 1, dans lequel la ou chaque chambre de réaction (32) est formée par un tube reformeur (32).

9. Appareil selon la revendication 1, dans lequel ladite pluralité de brûleurs est formée par des ensembles de brûleur allongés (10) ayant un axe longitudinal différent sensiblement parallèle auxdits premier et second axes longitudinaux, une première extrémité, et une seconde extrémité opposée à ladite première extrémité, la première extrémité dudit ensemble de brûleur (26) étant adjacente à la première extrémité de ladite coque (24) et la seconde extrémité de l'ensemble de brûleur (26) étant dans ladite première région de ladite coque (24), ledit ensemble de brûleur (26) étant sensiblement espacé de manière égale périphériquement autour de ladite paroi interne et au moins deux ensembles de brûleurs voisins (26) étant sensiblement équidistants de ladite chambre de réaction.

10. Appareil selon la revendication 9, dans lequel ladite chambre de réaction (32) est un tube reformeur (32).

11. Appareil selon la revendication 1, dans lequel lesdites une ou plusieurs chambres de réaction allongées (32) fournissent une pluralité de rayons, chaque rayon étant sensiblement perpendiculaire à ladite paroi interne, lesdits rayons divisant ladite aire de coupe transversale en une pluralité de secteurs de tailles égales ayant des formes sensiblement identiques, chacune desdites chambres de réaction (32) ayant une température de conception et un axe longitudinal différent sensiblement parallèle audit premier axe longitudinal et étant sensiblement symétrique autour dudit axe longitudinal différent, et
dans lequel au moins un brûleur (26) est disposé dans chacun desdits secteurs.

12. Procédé de production d'un produit provenant d'un procédé pour chauffer, reformer ou craquer des fluides hydrocarbures ou d'autres fluides, le procédé ayant une exigence de chauffage de procédé pour chauffer un fluide de procédé, comprenant les étapes consistant à :
fournir une coque allongée (32) comportant une paroi interne, un premier axe longitudinal, une première extrémité et une seconde extrémité opposée à ladite première extrémité, ladite coque (24) étant sensiblement symétrique autour dudit premier axe longitudinal et enfermant une première région intérieure adjacente à la première extrémité et une seconde région intérieure adjacente à la seconde extrémité, chacune desdites première et seconde régions intérieures étant sensiblement symétriques autour dudit premier axe longitudinal ;
fournir au moins une chambre de réaction allongée (32) ayant une température de conception et un second axe longitudinal sensiblement parallèle audit premier axe longitudinal, ladite chambre de réaction (32) étant sensiblement symétrique autour dudit second axe longitudinal, une première portion de ladite chambre de réaction étant disposée dans ladite première région intérieure de ladite coque (24) et une seconde portion de ladite chambre de réaction (32) étant disposée dans ladite seconde région intérieure de ladite coque (24), lesdites première et seconde portions de ladite chambre de réaction (32) étant adaptées pour contenir un écoulement dudit fluide de procédé ;
fournir une pluralité de brûleurs (26) adjacents à ladite paroi interne dans la première région intérieure, chacun desdits brûleurs (26) étant adapté pour brûler au moins un carburant ;
brûler ledit au moins un carburant dans au moins un desdits brûleurs (26), produisant ainsi des gaz brûlés dans ladite première région de ladite coque (24) ; ladite combustion se produisant adjacente à la sortie de la chambre de réaction (32), de telle sorte qu'au moins une portion dudit fluide de procédé s'écoule à travers au moins la première ou seconde portion de ladite chambre de réaction (32) à contre-courant avec au moins une portion dudit écoulement desdits gaz brûlés ;
transférer au moins une portion d'un écoulement desdits gaz brûlés de ladite première région intérieure de ladite coque (24) à ladite seconde région intérieure de ladite coque (24) ; et
délivrer au moins une portion dudit fluide de procédé à ladite chambre de réaction (32), ladite portion dudit fluide de procédé absorbant au moins une portion dudit flux de chaleur,
en brûlant ledit au moins un carburant dans au moins un de ladite pluralité de brûleurs (26), un flux de chaleur variable est produit approximant sensiblement ladite exigence de chauffage de procédé et maximisant simultanément ledit flux de chaleur à quasiment toute ladite première portion de ladite chambre de réaction (32) tout en maintenant quasiment toute ladite première portion sensiblement à ladite température de conception sans excéder sensiblement ladite température de conception.

13. Procédé selon la revendication 12, comprenant l'étape supplémentaire consistant à retirer un courant du produit de ladite chambre de réaction (32).

14. Procédé selon la revendication 12, dans lequel une flamme est dirigée radialement dudit brûleur (26) sensiblement vers ledit premier axe longitudinal de ladite coque (24).

15. Procédé selon la revendication 12, dans lequel la ou chaque chambre de réaction allongée (32) est formée par un tube reformeur.

16. Procédé selon la revendication 12, comprenant l'étape additionnelle consistant à :
fournir une pluralité d'ensembles de brûleur allongés (26) ayant chacun un axe longitudinal différent sensiblement parallèle auxdits premier et second axes longitudinaux, une première extrémité et une seconde extrémité opposée à ladite première extrémité, la première extrémité dudit ensemble de brûleur (29) étant adjacente à la première extrémité de ladite coque (24) et la seconde extrémité dudit ensemble de brûleur (26) étant dans ladite première région de ladite coque (24), lesdits ensembles de brûleur (26) étant sensiblement espacés de manière égale périphériquement autour de ladite paroi interne et au moins deux ensembles de brûleurs voisins (26) étant sensiblement équidistants de ladite chambre de réaction.

17. Procédé selon la revendication 16, dans lequel la ou chaque chambre de réaction (32) est un tube reformeur.

18. Procédé selon la revendication 12, comprenant l'étape additionnelle consistant à :
fournir une pluralité de rayons d'une ou plusieurs chambres de réaction allongées (32), chaque rayon étant sensiblement perpendiculaire à ladite paroi interne, lesdits rayons divisant ladite aire en coupe transversale en une pluralité de secteurs de tailles égales ayant des formes sensiblement identiques, chacune desdites chambres de réaction (32) ayant une température de conception et un axe longitudinal différent sensiblement parallèle audit premier axe longitudinal et étant sensiblement symétrique autour dudit axe longitudinal différent, une première portion de chacune desdites chambres de réaction (32) étant disposée dans ladite première région intérieure de ladite coque (24) et une seconde portion de chacune desdites chambre de réaction (32) étant disposée dans ladite seconde région intérieure de ladite coque (24), lesdites première et seconde portions de ladite chambre de réaction (32) étant adaptées pour contenir un écoulement dudit fluide de procédé ;
dans lequel au moins un brûleur (26) est disposé dans chacun desdits secteurs.
